# EUROPÄISCHE PATENTANMELDUNG

(11) **EP 2 829 524 A1**
(43) Veröffentlichungstag der Anmeldung: **28.01.2015**
(21) Anmeldenummer: 13177783.1
(22) Anmeldetag: 24.07.2013
(51) Int. Cl.: C04B 26/06

(54) **Harzmischung, Reaktionsharz-Mörtel, Mehrkomponenten-Mörtelsystem und deren Verwendung**

(71) Anmelder: HILTI Aktiengesellschaft, 9494 Schaan (LI)
(72) Erfinder: Bürgel, Thomas, 86899 Landsberg am Lech (DE); Mönch, Monika, 86899 Landsberg/Lech (DE)
(74) Vertreter: Hilti Aktiengesellschaft Corporate Intellectual Property

(57) **Zusammenfassung**

Beschrieben wird eine Harzmischung umfassend mindestens eine radikalisch polymerisierbare Verbindung, mindestens einen Reaktivverdünner ausgewählt unter 1,3-Dicarbonylverbindungen und mindestens einen Polymerisationsinhibitor ausgewählt unter stabilen N-Oxyl-Radikalen oder 4-Hydroxy-3,5-di-tert-butyltoluol, wobei das molare Verhältnis der mindestens einen 1,3-Dicarbonylverbindung und des Polymerisationsinhibitors 30:1 bis 150:1 beträgt, einen diese Harzmischung enthaltenden Reaktionsharzmörtel, ein Zwei- oder Mehrkomponenten-Mörtelsystem sowie die Verwendung zu Bauzwecken, insbesondere zur chemischen Befestigung in mineralischen Untergründen.

## Beschreibung

Die vorliegende Erfindung betrifft eine Harzmischung umfassend mindestens eine radikalisch polymerisierbare Verbindung, mindestens einen Reaktivverdünner ausgewählt unter 1,3-Dicarbonylverbindungen und mindestens einen Polymerisationsinhibitor, einen diese Harzmischung enthaltenden Reaktionsharzmörtel, ein den Reaktionsharzmörtel enthaltendes Zwei- oder Mehrkomponenten-Mörtelsystem sowie die Verwendung zu Bauzwecken, insbesondere zur chemischen Befestigung.

Zweikomponenten-Mörtelmassen mit einer härtbaren Harzkomponente mit einem Gehalt an mindestens einem radikalisch polymerisierbaren Harz, Füllstoffen, Beschleunigern, Stabilisatoren und gegebenenfalls weiteren üblichen Mörtelbestandteilen, und einer davon reaktionsinhibierend getrennt angeordneten Härterkomponente mit einem Gehalt an mindestens einem Peroxid ihre Verwendung für Bauzwecke sind bekannt.

Zweikomponenten-Mörtelmassen dieser Art werden beispielsweise als Injektionsmörtel für die chemische Verankerung von Befestigungselementen, vorzugsweise Metallelementen in verschiedenen Untergründen, vorzugsweise mineralischen Untergründen, wie insbesondere Bauwerken aus Ziegelwerk, Beton oder Naturstein, eingesetzt. Dabei werden zunächst die zur Befestigung der Verankerungsmittel erforderlichen Bohrlöcher in den mineralischen Untergrund eingebracht, wonach die härtbare Harzkomponente mit der Härterkomponente der Zweikomponenten-Mörtelmasse vermischt und in das Bohrloch eingebracht wird, worauf das zu befestigende Verankerungsmittel eingeführt und justiert wird und die Mörtelmasse aushärtet. Hierfür vertreibt die Anmelderin Injektionsmörtel in Form von schnell härtenden Systemen, die ein Hybridsystem aus einem radikalisch härtenden Methacrylatharz und einem hydraulisch abbindenden Zement aufweist, welches nach der Verarbeitung im Bohrloch einen äußerst belastbaren Kunststoff ergibt.

Gewöhnlich werden bei den Injektionsmörteln für die chemische Verankerung von Verankerungselementen in Bohrlöchern, die Mörtelmassen entweder als Universalmörtel deklariert oder die Mörtelmasse wird abgestimmt auf den Untergrund formuliert. Bei der Deklarierung als Universalmörtel bedeutet das, dass die Mörtelmasse für alle mineralischen Untergründe, im Allgemeinen Beton, Mauerwerk (Vollziegel oder Vollsteinmauerwerk), Hohlmauerwerk (Hohlziegel oder Lochsteinmauerwerk), Leicht- oder Porenbeton und dergleichen, geeignet sind, wobei die Lastwerte für die jeweiligen Untergründe stark schwanken. Werden die Mörtelmasse für deren Verwendung für bestimmte Untergründe abgestimmt, bedeutet dies, dass die Mörtelmassen ganz gezielt für den Einsatz in eine bestimmten Untergrundart formuliert werden, dadurch optimiert werden und damit für die entsprechende Verwendung bessere Lastwerte liefern. Kommerziell erhältlich Beispiele für einen universell verwendbaren Injektionsmörtel ist das Produkt Hilti HIT-HY 70 Injektionsmörtel und Hilti HFX Injektionsmörtel. Als Beispiele für speziell formulierte Mörtelmassen können Hilti HIT-HY 150 MAX für den Einsatz in Beton und Hilti HIT-ICE Injektionsmörtel für Untergrundtemperaturen bis -18°C genannt werden.

Es hat sich herausgestellt, dass insbesondere im Vollziegel die Leistungsfähigkeit der meisten Mörtelmassen, vor allem der universell formulierten Mörtelmassen begrenzt ist und stark von der Untergrundtemperatur abhängt.

Bei der Entwicklung eines kennzeichnungsfreien Produktes, analog der in der DE 10 2010 051 818 B3 beschriebene Mörtelmasse, speziell für die Verwendung im Mauerwerk, hat sich gezeigt, dass die bisher als besonders leistungsfähig eingestuften Polymerisationsinhibitoren, wie Brenzkatechin oder 4-tert-Butylbrenzkatechin (EP 1935860 A1) nicht zum erwarteten mäßig-guten Leistungsniveau führen. Mit den genannten Polymerisationsinhibitoren konnten nur sehr geringe Lastwerte erreicht werden, welche für viele Anwendungen, insbesondere Anwendungen, die hohe Lastwerte erfordern, nicht ausreichend sind. Auch die Verwendung der als besonders für die Ziegelanwendung bekannten Reaktivverdünner, nämlich Hydroxyalkyl(meth)acrylate, wie das Hydroxypropylmethacrylat (DE 10 2004 035 567 A1), oder Acetoacetoxyalkyl(meth)acrylate, wie das Acetoacetoxyethylmethacrylat (DE 41 31 457 A1), deren Kombination (DE 10 2004 035 567 B4) oder zusätzlich mit Alkyl(meth)acrylaten (DE 10 2009 043 792 A1) konnte die Leistungsfähigkeit nicht wesentlich verbessern.

Es besteht also Bedarf an einer leistungsfähigen Mörtelmasse für die Anwendung im Mauerwerk, insbesondere Ziegeluntergründen, die im unteren Leistungsbereich (niedrigere Lastwerte) kennzeichnungsfrei ist und dennoch bessere oder zumindest vergleichbare Lastwerte liefert wie die bisher erhältlichen Injektionsmörtel und die ansonsten deutlich verbesserte Lastwerte liefert.

Die Aufgabe der Erfindung besteht also darin, einen Reaktionsharzmörtel mit einer verbesserten Leistungsfähigkeit bei der Anwendung in mineralischen Untergründen, insbesondere Mauerwerk bereitzustellen.

Die Erfinder konnten herausfinden, dass die Wahl des Polymerisationsinhibitor, insbesondere des Inhibitors zur Einstellung der Gelierzeit, sowie die Wahl des Reaktivverdünners einen entscheidenden Einfluss auf die Leistungsfähigkeit, insbesondere auf die Versagenslasten im Ziegel hat. Völlig unerwartet und überraschend hat sich gezeigt, dass die Aufgabe dadurch gelöst werden kann, wenn statt des Brenzkatechins und dessen Derivate ein freies NO-Radikal oder das sterisch gehinderte Phenol 3,5-Di-*tert*-butyl-4-hydroxytoluol (BHT) als Polymerisationsinhibitoren und geeignete 1,3-Dicarbonylverbindungen als Reaktivverdünner verwendet werden.

Zum besseren Verständnis der Erfindung werden zunächst die folgenden Erläuterungen der hierin verwendeten Terminologie als sinnvoll erachtet. Im Sinne der Erfindung bedeutet:
- *"Harzmischung"* eine Mischung aus dem Reaktionsgemisch der Harzherstellung, enthaltend die radikalisch polymerisierbare Verbindung, gegebenenfalls einen Katalysator für die Herstellung der Verbindung, Reaktivverdünner, und Beschleunigern sowie Stabilisatoren und ggf. weiteren Reaktivverdünnern;
- *"Reaktionsharzmörtel"* eine Mischung aus Harzmischung und anorganischen Zuschlagstoffen;
- *"Härtungsmittel"* Stoffe, welche die Polymerisation (das Härten) des Grundharzes bewirken;
- *"Härter"* eine Mischung aus Härtungsmittel und organischen und/oder anorganischen Zuschlagstoffen;
- *"Beschleuniger"* eine zur Beschleunigung der Polymerisationsreaktion (Härtung) fähige Verbindung, die dazu dient, die Bildung des Radikalstarters zu beschleunigen;
- *"Polymerisationsinhibitor",* hierin gleichbedeutend auch kurz als *"Inhibitor"* bezeichnet, eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden (oftmals als Stabilisator bezeichnet) und die dazu dient, den Start der Polymerisationsreaktion unmittelbar nach der Zugabe des Härtungsmittels zu verzögern; um den Zweck der Lagerstabilität zu erreichen, wird der Inhibitor üblicherweise in so geringen Mengen eingesetzt, dass die Gelierzeit nicht beeinflusst wird; um den Zeitpunkt des Starts der Polymerisationsreaktion zu beeinflussen, wird der Inhibitor üblicherweise in solchen Mengen eingesetzt, dass die Gelierzeit beeinflusst wird;
- *"Reaktivverdünner"* flüssige oder niedrigviskose radikalisch polymerisierbare Verbindungen, welche die Harzmischung verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil der gehärteten Masse (Mörtel) werden;
- *"Mörtelmasse"* die Formulierung, die durch Mischen des Reaktionsharzmörtels mit dem Härter erhalten wird, und als solche direkt zur chemischen Befestigung verwendet werden kann;
- *"Zweikomponentensystem"* ein System, das zwei voneinander getrennt gelagerte Komponenten, im Allgemeinen eine Harz- und eine Härterkomponente, umfasst, so dass eine Härtung des Reaktionsharzmörtels erst nach dem Mischen der beiden Komponenten erfolgt;
- *"Mehrkomponentensystem"* ein System, das drei oder mehrere voneinander getrennt gelagerte Komponenten umfasst, so dass eine Härtung des Reaktionsharzmörtels erst nach dem Mischen aller Komponenten erfolgt;
- *"Gelierzeit'* die Zeit der Härtungsphase des Harzes, in der sich die Temperatur des Harzes von +25°C auf +35°C erhöht; dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"(Meth)acryl*.../...*(meth)acryl*..." dass sowohl die *"Methacryl...*/*...methacryl..."-* als auch die "*Acryl*.../...acryl..."-Verbindungen umfasst sein sollen.

Die Erfinder haben überraschend herausgefunden, dass mit einer Kombination aus bestimmten Reaktivverdünnern und bestimmten Polymerisationsinhibitoren die Leistungsfähigkeit einer Mörtelmasse deutlich gesteigert werden kann.

Ein erster Gegenstand der Erfindung ist daher eine Harzmischung, die mindestens eine radikalisch polymerisierbare Verbindung, mindestens einen Reaktivverdünner und mindestens einen Inhibitor umfasst.

Erfindungsgemäß ist der Reaktivverdünner unter 1,3-Dicarbonylverbindungen der allgemeinen Formel (I) 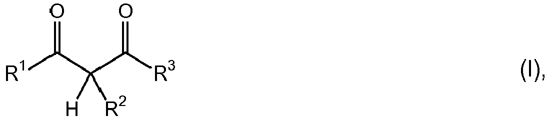 in der
- R¹: eine geradkettige oder verzweigte, gegebenenfalls substituierte, C₁-C₆-Alkylgruppe, bevorzugt C₁-C₂-Alkylgruppe bedeutet;
- R³: Wasserstoff oder eine geradkettige oder verzweigte, gegebenenfalls substituierte, C₁-C₆-Alkylgruppe, bevorzugt C₁-C₂-Alkylgruppe oder eine C₁-C₆-Alkoxygruppe, bevorzugt C₁-C₂-Alkoxygruppe, oder eine Methacryloyloxygruppe der Formel (II) 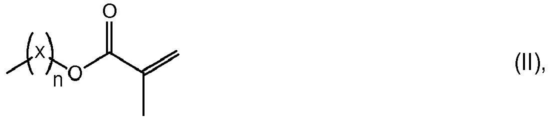
in der X eine Methylen-, Ethylenglykol- oder Propylenglykolgruppe bedeutet und n eine ganze Zahl mit einem Wert von 1 bis einschließlich 6, bevorzugt 1 bis einschließlich 3, bedeutet;
- R²: Wasserstoff, eine geradkettige oder verzweigte, gegebenenfalls substituierte, C₁-C₆-Alkylgruppe, bevorzugt C₁-C₂-Alkylgruppe, oder eine C₁-C₆-Alkoxygruppe, bevorzugt C₁-C₂-Alkoxygruppe, bedeutet, oder zusammen mit R³ einen, gegebenenfalls substituierten, fünf- oder sechsgliedrigen aliphatischen Ring bildet, welcher gegebenenfalls Heteroatome im oder am Ring umfasst;
oder der allgemeinen Formel (III) ausgewählt 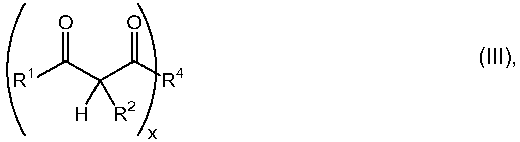 in der
- R⁴: ein zwei oder höherwertiger Alkohol (im Folgenden auch als Polyolverbindung bezeichnet) bedeutet,
- x: eine Zahl zwischen 1 und 6 bedeutet, und
- R¹ und R²: dieselbe Bedeutung wie oben definiert haben, wobei R¹ besonders bevorzugt eine Methylgruppe und R² besonders bevorzugt Wasserstoff bedeutet.

Geeignete zwei oder höherwertige Alkohole umfassen zum Beispiel Alkandiole, Alkylenglykole, wie Ethylenglykol oder Propylenglykol, Glycerole, Zucker, Pentaerythritole, mehrwertige Derivate oder Gemische davon. Einige Beispiele für höherwertige Alkohole sind Neopentylglykol, Trimethylolpropan, Ethylenglykol und Polyethylenglykol, Propylenglykol und Polypropylenglykol, Butandiol, Pentandiol, Hexandiol, Tricyclodecandimethylol, 2,2,4-Trimethyl-1,3-pentandiol, Bisphenol A, Cyclohexandimethanol, Rizinusöl sowie deren alkoxylierte und/oder propoxylierte Derivate.

In einer weiteren Ausführungsform der Erfindung ist die Verbindung der Formel (III) ausgewählt unter Acetoacetaten von gegebenenfalls einfach oder mehrfach ethoxylierten und propoxylierten Diolen, Triolen und Polyolen, wie beispielsweise Ethylenglykolmonoacetoacetat, Ethylenglykoldiacetoacetat, 1,2-Propandiolmonoacetoacetat, 1,2-Propandioldiacetoacetat, 1,3-Propandiolmonoacetoacetat, 1,3-Propandioldiacetoacetat, 1,4-Butandiolmonoacetoacetat, 1,4-Butandioldiacetoacetat, 1,6-Hexandiolmonoacetoacetat, 1,6-Hexandioldiacetoacetat, Neopentylglykolmonoacetoacetat, Neopentylglykoldiacetoacetat, Trimethylolpropanmonoacetoacetat, Trimethylolpropandiacetoacetat oder Trimethylolpropantriacetoacetat, Glycerinmonoacetoacetat, Glycerindiaceoacetat, Glycerintriacetoacetat, Pentaerythritoltetraacetoacetat, Pentaerythritolmonoacetoacetat, Pentaerythritoldiacetoacetat, Pentaerythritoltriacetoacetat, Pentaerythritoltetraacetoacetat, Dipentaerythritolmonoacetoacetat, Dipentaerythritoldiacetoacetat, Dipentaerythritoltriacetoacetat, Dipentaerythritoltertaacetoacetat, Dipentaerythritolpentaacetoacetat oder Dipentaerythritolhexaacetoacetat.

In einer Ausführungsform ist die Verbindung der Formel (I) eine Verbindung der Formel (IV)

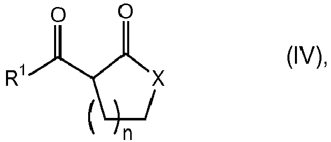

in der n für 1, 2 oder 3, bevorzugt für 1 oder 2, steht und X für O, S, oder NR⁵, bevorzugt für O, steht, worin R⁵ für Wasserstoff oder eine, gegebenenfalls substituierte, Alkyl-, Cycloalkyl-, Aryl oder Aralkylgruppe steht.

Bevorzugt steht in Formel (IV) n für 1, X für O und R¹ für OR⁶, worin R⁶ für eine, gegebenenfalls substituierte, Alkylgruppe, besonders bevorzugt Methylgruppe, steht. Ganz besonders bevorzugt ist die Verbindung der Formel (IV) α-Acetyl-γ-butyrolacton (ABL).

In einer besonders bevorzugten Ausführungsform der Erfindung ist der mindestens eine Reaktivverdünner aus der Gruppe ausgewählt, die aus Acetylaceton, 2-(Acetoacetoxy)ethylmethacrylat, Triacetoacetatotrimethylolpropan, Benzylacetoacetat, α-Acetyl-γ-butyrolacton, *tert*-Butylacetoacetat und Ethylacetoacetat besteht.

Die 1,3-Dicarbonylverbindung wird der Harzmischung bevorzugt in einer Menge von 1 bis 15 Gew.-%, stärker bevorzugt von 6 bis 10 Gew.-% zugegeben.

Erfindungsgemäß ist der Inhibitor unter stabilen *N*-Oxyl-Radikalen oder 4-Hydroxy-3,5-di-tert-butyltoluol ausgewählt.

Als N-Oxyl-Radikale (hierin gleichbedeutend auch als Nitroxylradikale bezeichnet) können erfindungsgemäß solche verwendet werden, wie sie in der DE 199 56 509 A1 beschrieben sind. Geeignete stabile N-Oxyl-Radikale können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-*N*-nitrosophenylhydroxylamin, Diethylhydroxylamin ausgewählt werden. Ferner sind geeignete Nitroxylradikale Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, oder Indolin-Nitroxylradikale, wie 2,3-Dihydro-2,2-diphenyl-3-(phenylimino)-1H-indol-1-oxylnitroxid, oder β-phosphorylierte Nitroxylradikale, wie 1-(Diethoxyphosphinyl)-2,2-dimethylpropyl-1,1-dimethylmethyl-nitroxid, und dergleichen. In diesem Zusammenhang wird auf die DE 199 56 509 A1 verwiesen, deren Inhalt hiermit in die Anmeldung aufgenommen wird. Die *N*-Oxyl-Radikale können alleine oder als Gemisch verwendet werden.

In einer bevorzugten Ausführungsform der Erfindung ist der Polymerisationsinhibitor aus der Gruppe ausgewählt, die aus Piperidinyl-*N*-oxyl-, Tetrahydropyrrol-*N*-oxyl-, Indolin-*N-*oxyl-, β-phosphorylierten *N*-Oxyl-Radikalen und 4-Hydroxy-3,5-di-tert-butyltoluol besteht. Der Inhibitor wird der Harzmischung bevorzugt in einer Menge von 0,005 bis 2 Gew.-%, stärker bevorzugt von 0,05 bis 1 Gew.-% zugegeben.

Erfindungsgemäß liegt die 1,3-Dicarbonylverbindung gegenüber dem Polymerisationsinhibitor im Überschuss vor, wobei das Gewichtsverhältnis der mindestens einen 1,3-Dicarbonylverbindung und des Polymerisationsinhibitors 30:1 bis 150:1, bevorzugt 50:1 bis 150:1, besonders bevorzugt 75:1 bis 135:1 beträgt.

Als radikalisch polymerisierbare Verbindungen sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Veröffentlichungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen. Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Veröffentlichungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglykolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylesterharz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

In einer Ausführungsform der Erfindung enthält die Zusammensetzung weitere niederviskose, radikalisch polymerisierbare Verbindungen als Reaktivverdünner für die radikalisch polymerisierbare Verbindung, um den Vernetzungsgrad des Harzes und/oder deren Viskosität, falls erforderlich, anzupassen.

Geeignete Reaktivverdünner sind in den Veröffentlichungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N, N-Dimethylaminoethyl(meth)acrylat, N,N-Dimethylaminomethyl(meth)acrylat, Butandiol-1,4-di(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol (2-Phenyl-1-propen), alkylierte Styrole, wie tert-Butylstyrol, Divinylbenzol und Allylverbindungen.

Die weiteren Reaktivverdünner werden der Harzmischung bevorzugt in einer Menge von 20 bis 50 Gew.-%, abhängig von der gewünschten Viskosität der Harzmischung, zugegeben. Mit dem weiteren Reaktivverdünner bzw. den weiteren Reaktivverdünnern wird die Viskosität der Harzmischung eingestellt.

Neben den erfindungsgemäß enthaltenen Inhibitoren kann die Harzmischung in geringen Mengen außerdem noch weitere Inhibitoren enthalten, im Wesentlichen für die Lagerstabilität der radikalisch polymerisierbaren Verbindung und damit der Harzmischung sowie einen diese enthaltenden Reaktionsharzmörtel. Diese können entweder von der Herstellung der radikalisch polymerisierbaren Verbindung oder den Reaktivverdünnern eingebracht werden oder werden während der Formulierung der Harzmischung zugegeben.

Als weitere Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und weiteren nichtphenolischen Verbindungen ausgewählt.

Als phenolische Inhibitoren, die oft Bestandteil von kommerziellen radikalisch härtenden Reaktionsharzen sind, sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Napthochinon, oder Gemische von zweien oder mehreren davon, in Frage.

Als nicht-phenolische kommen vorzugsweise Phenothiazine wie Phenothiazin und/oder Derivate oder Kombinationen davon in Betracht.

Ferner können in para-Stellung zur Hydroxylgruppe substituierte Pyrimidinol- oder Pyridinol-Verbindungen, wie sie in der nicht vorveröffentlichten Patentschrift DE 10 2011 077 248 B1 beschrieben sind, als Inhibitoren eingesetzt werden.

Zweckmäßig wird als Härtungsmittel für die radikalisch polymerisierbare Verbindung ein Radikalinitiator, insbesondere ein Peroxid verwendet. Neben dem Radikalinitiator kann daher zusätzlich ein Beschleuniger eingesetzt werden. Hierdurch werden schnellhärtende Reaktionsharzmörtel erhalten, die kalthärtend sind. Zweckmäßig wird der Beschleuniger getrennt von dem Härtungsmittel gelagert und kann der Harzmischung zugegeben werden.

Geeignete Beschleuniger, die gewöhnlich der Harzmischung zugegeben werden, sind dem Fachmann bekannt. Werden Peroxide als Härtungsmittel eingesetzt, ist der Beschleuniger beispielsweise ein Amin, bevorzugt ein tertiäres Amin und/oder ein Metallsalz.

Geeignete Amine sind unter folgenden Verbindungen ausgewählt, die beispielsweise in der US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diaminodimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan sowie deren ethoxylierte und/oder propoxylierte Derivate.

Polymere Amine, wie solche die durch Polykondensation von N,N-Bis(hydroxylalkyl)anilin mit Dicarbonsäuren oder durch Polyaddition von Ethylenoxid an diese Amine erhalten werden, sind ebenso als Beschleuniger geeignet.

Geeignete Metallsalze sind, zum Beispiel Cobaltoctoat oder Cobaltnaphthenoat sowie Eisen-, Vanadium-, Kalium-, Kalzium-, Kupfer-, Mangan- oder Zirkoniumcarboxylate.

Sofern ein Beschleuniger verwendet wird, wird er in einer Menge von 0,2 bis 3 Gew.-%, bevorzugt 0,3 bis 2 Gew.-%, bezogen auf die Harzmischung, eingesetzt.

In einer Ausführungsform kann die Harzmischung zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung der Zweikomponenten-Dübelmasse z.B. in Diamantgebohrten Bohrlöchern von Bedeutung und erhöht die Lastwerte. Geeignete Haftvermittler sind aus der Gruppe der Silane, die mit weiteren reaktiven organischen Gruppen funktionalisiert sind und in das Polymernetzwerk eingebunden werden können, ausgewählt, und die insbesondere hydrolysierbare Gruppen aufweisen. In dieser Hinsicht wird Bezug genommen auf die Veröffentlichung DE 10 2009 059 210 A1, deren Inhalt hiermit in die Anmeldung aufgenommen wird.

Die Erfinder konnten ferner herausfinden, dass die Viskosität der Harzmischung einen merklichen Einfluss auf die Leistungsfähigkeit einer die erfindungsgemäße Harzmischung enthaltenden Mörtelmasse hat. Dabei steigen die Lastwerte mit zunehmender Viskosität an wobei der Viskosität dahingehend Grenzen gesetzt sind, dass nach der Formulierung eines Zwei- oder Mehrkomponenten-Systems die Massen noch verarbeitbar sein müssen. Insbesondere müssen die Massen noch mit einem manuellen Dispenser ausgebracht werden können.

Als bevorzugter Bereich für die Viskosität der Harzmischung, in dem ein Einfluss auf die Lastwerte beobachtet werden konnte, hat sich 200 und 800 mPa·s, bevorzugt zwischen 300 und 500 mPa·s gemessen nach DIN EN ISO 2884 mit einem Rheometer RS 600 der Fa. Haake, Karlsruhe; Messgeometrie Platte-Kegel ∅ 60 mm, 1° Titan (C60/1 ° Ti), Spalt 0,052 mm bei 23°C und einer Schergeschwindigkeit von 150 s⁻¹, herausgestellt.

Wie bereits beschrieben, wird die Viskosität der erfindungsgemäßen Harzmischung durch den weiteren Zusatz an geeigneten Reaktivverdünnern auf den gewünschten Wert eingestellt werden.

Ein weiterer Gegenstand der Erfindung ist ein Reaktionsharzmörtel, der neben der eben beschriebenen Harzmischung anorganische und/oder organische Zuschlagstoffe enthält, wie Füllstoffe und/oder weitere Additive.

Der Anteil der Harzmischung in dem Reaktionsharzmörtel beträgt bevorzugt 10 bis 70 Gew.-%, stärker bevorzugt 40 bis 60 Gew.-%, bezogen auf den Reaktionsharzmörtel.

Dementsprechend beträgt der Anteil der Zuschlagstoffe bevorzugt 90 bis 30 Gew.-%, stärker bevorzugt 60 bis 40 Gew.-%, bezogen auf den Reaktionsharzmörtel.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden.

Weitere mögliche Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Der Erfindungsgemäße Reaktionsharzmörtel eignet sich insbesondere als Harzkomponente für eine Mörtelmasse, die für Bauzwecke geeignet ist. Besonders eignet sich der Reaktionsharzmörtel als Harzkomponente für eine Dübelmasse zur chemischen Befestigung in mineralischen Untergründen.

Der Reaktionsharzmörtel kann dabei vollständig in einer Komponente enthalten sein und diese im Wesentlichen bilden. Alternativ kann der Reaktionsharzmörtel auf mehrere, im allgemeinen räumlich getrennte, Komponenten aufgeteilt werden.

Damit die radikalisch polymerisierbare Verbindung und somit der Reaktionsharzmörtel aushärtet, muss diesem kurz vor der Anwendung ein Härtungsmittel zugeführt werden. Bevorzugt enthält die Komponente (Härter), welche das Härtungsmittel enthält, ferner anorganische und/oder organische Zuschlagstoffe, wobei die Zuschlagstoffe dieselben sein können, wie sie dem Reaktionsharzmörtel zugegeben werden können sowie auch Wasser oder andere flüssige Hilfsmittel. Bei den Zuschlagstoffen handelt es gewöhnlich um Füllstoffe und/oder Additive. Die Zuschlagstoffe werden dabei in Mengen von 20 bis 90 Gew.-%, bevorzugt 50 bis 80 Gew.-%, bezogen auf den Härter eingesetzt.

Der Härter ist gewöhnlich vollständig in einer Komponente enthalten, die zweckmäßig eine andere ist, als die, welche den Reaktionsharzmörtel enthält bzw. enthalten, so dass das Härtungsmittel reaktionsinhibierend von der radikalisch polymerisierbaren Verbindung und den anderen Bestandteilen des Reaktionsharzmörtels, welche radikalisch polymerisieren können, getrennt ist. Der Härter bildet dabei auch eine weitere Komponente des Zwei- oder Mehrkomponenten-Mörtelsystems. Auch der Härter kann auf mehrere Komponenten aufgeteilt sein.

Die Komponente, die den Reaktionsharzmörtel enthält, bzw. die Komponenten, die den gewichtsmäßig oder nach Bestandteilen aufgeteilten Reaktionsharzmörtel enthalten, wird bzw. werden als Harzkomponente bezeichnet. Die Komponente, die den Härter enthält, bzw. die Komponenten, die den gewichtsmäßig oder in Bestandteile aufgeteilten Härter enthalten, wird bzw. werden als Härterkomponente bezeichnet.

Dementsprechend ist ein weiterer Gegenstand der Erfindung ein Zwei- oder Mehrkomponenten-Mörtelsystem umfassend einen oben beschriebenen Reaktionsharzmörtel und reaktionsinhibierend getrennt einen Härter, der ein Härtungsmittel und anorganische und/oder organische Zuschlagstoffe umfasst.

Bevorzugt ist das Mörtelsystem als Zweikomponenten-Mörtelsystem konfektioniert, wobei die eine Komponente den Reaktionsharzmörtel (Harzkomponente) und die andere Komponente den Härter (Härterkomponente) enthält. Die beiden Komponenten sind zweckmäßig reaktionsinhibierend getrennt angeordnet.

Bevorzugt wird die Härtung mit einem anorganischen oder organischen Peroxid als Härtungsmittel initiiert. Alle dem Fachmann bekannten Peroxide, die zum Härten von ungesättigten Polyesterharzen und Vinylesterharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)O-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Zweckmäßig kann bei dem erfindungsgemäßen Zwei- oder Mehrkomponenten-Mörtelsystem die Härterkomponente das Peroxid in einer Menge von 0,1 bis 3 Gew.-% und bevorzugt von 0,25 bis 2 Gew.-% enthalten, bezogen auf das Gesamtgewicht des Zwei- oder Mehrkomponenten-Mörtelsystems, d.h. des Reaktionsharzmörtels und des Härters.

Wird die Härtung der radikalisch polymerisierbaren Verbindung mit einem Beschleuniger beschleunigt, so wird dieser zweckmäßig zu dem Reaktionsharzmörtel gegeben. Bei dem Zwei- oder Mehrkomponenten-Mörtelsystem kann der Reaktionsharzmörtel den Beschleuniger in einer Menge von 0,1 bis 1,5 Gew.-% und bevorzugt von 0,25 bis 1,0 Gew.-% enthalten, bezogen auf das Gesamtgewicht des Zwei- oder Mehrkomponenten-Mörtelsystems.

Der Reaktionsharzmörtel enthält zweckmäßig ebenfalls den Inhibitor. Bei dem Zwei- oder Mehrkomponenten-Mörtelsystem kann der Reaktionsharzmörtel den Inhibitor in einer Menge von 0,003 bis 0,35 Gew.-% und bevorzugt von 0,01 bis 0,2 Gew.-% enthalten, bezogen auf das Gesamtgewicht des Zwei- oder Mehrkomponenten-Mörtelsystems. Dabei ist zu berücksichtigen, dass die gegebenenfalls im Harzmasterbatch bzw. zur Stabilisierung der Harzmischung zugegebenen weiteren Inhibitoren bei der Berechnung der Menge mitgerechnet werden müssen, so dass die gesamte Menge an Inhibitor im angegebenen Bereich liegt.

Herkömmliche Mörtelmassen enthalten bezogen auf das Gesamtgewicht aus Reaktionsharzmörtel und Härter 1,5 bis 3 Gew.-% Härtungsmittel, bevorzugt ein Peroxid und besonders bevorzugt Dibenzoylperoxid (BPO). In Abhängigkeit vom Mischungsverhältnis muss der Härter dabei 7 bis 15% des Peroxides enthalten. Dies führt zur Kennzeichnung des Härters als "sensibilisierend". Kennzeichnungsfrei sind Härter mit einem BPO-Gehalt unter 1 %.

Soll gemäß einer bevorzugten Ausführungsform des Zwei- oder Mehrkomponenten-Mörtelsystems ein kennzeichnungsfreies System mit dieser geringen Peroxidkonzentration bereitgestellt und formuliert werden, sind die Konzentrationen an Beschleuniger und Inhibitor deutlich zu reduzieren. Diese liegen für den Beschleuniger im Bereich von 0,1 bis 0,5 Gew.-% und für den Inhibitor im Bereich von 0,003 bis 0,07 Gew.-%. Hierbei beziehen sich die Mengenangaben "Gew.-%" jeweils auf das Gesamtgewicht des Zwei- oder Mehrkomponenten-Mörtelsystems.

Dementsprechend betrifft eine bevorzugte Ausführungsform der Erfindung ein Zwei- oder Mehrkomponenten-Mörtelsystem, wobei der Beschleuniger in einer Menge von 0,1 bis 0,5 Gew.-%, der Inhibitor in einer Menge von 0,003 bis 0,07 Gew.-% und das Härtungsmittel in einer Menge von 0,1 bis 0,35 Gew.-% enthalten sind, jeweils bezogen auf das Gesamtgewicht des Zwei- oder Mehrkomponenten-Mörtelsystems.

Damit können beispielsweise bei einem Peroxidgehalt von 0,25 Gew.-%, bezogen auf das Gesamtgewicht von Reaktionsharzmörtel und Härter, bei einem Mischungsverhältnis von Reaktionsharzmörtel zu Härter von 3:1 Gew.-Teilen bei einem Inhibitorgehalt von 0,07 Gew.-% durch Variation des Beschleunigergehalts von 0,35 Gew.-% ± 25% Gelierzeiten bei 25°C von 2,5 bis 6 Minuten eingestellt werden.

Dabei hat sich herausgestellt, dass Zwei- oder Mehrkomponentenmörtel der in Rede stehenden Art bei einer Beschleunigerkonzentration von mehr als 0,5 Gew.-% bei der angegebenen Peroxidkonzentration von 0,25 Gew.-% mit Inhibitoren die genannte Gelierzeit nicht eingestellt werden können, da die Formulierungen bei den dafür benötigten, erhöhten Inhibitorkonzentrationen nicht mehr sicher aushärten.

Allerdings ist es mit der erfindungsgemäßen Zwei- oder Mehrkomponentenmörtelmasse möglich, nicht nur die Kennzeichnung des Peroxidgehalts zu vermeiden, sondern auch eine Mörtelmasse bereitzustellen, die bei einem breiten des Mischungsverhältnisses von Reaktionsharzmörtel zu Härter im Bereich von 3:1 bis 5:1 Gew.-Teilen bei einer ausreichenden Verarbeitungszeit gute Aushärtung und hohe Lastwerte zu erreichen.

Bei einer bevorzugten Ausführungsform des Zweikomponenten-Mörtelsystems enthält die Harzkomponente neben dem Reaktionsharzmörtel zusätzlich noch eine hydraulisch abbindende oder polykondensierbare anorganische Verbindung und die Härterkomponente neben dem Härtungsmittel noch Wasser. Derartige Mörtelmassen sind ausführlich in DE 42 31 161 A1 beschrieben. Dabei enthält die A Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Als polykondensierbare anorganische Verbindung können auch silikatische, polykondensierbare Verbindungen, insbesondere lösliches, gelöstes und/oder amorphes Siliziumdioxid enthaltende Stoffe verwendet werden.

In einer besonders bevorzugten Ausführungsform der Zweikomponenten-Mörtelmasse enthält die Harzkomponente 8 bis 25 Gew.-% radikalisch polymerisierbares Harz, 8 bis 25 Gew.-% Reaktivverdünner, 0,1 bis 0,5 Gew.-% Beschleuniger und 0,003 bis 0,07 Gew.-% Inhibitor, 40 bis 70 Gew.-% Füllstoff und 0,5 bis 5 Gew.-% Verdickungsmittel und die Härterkomponente 0,1 bis 0,35 Gew.-% Peroxid, 3 bis 15 Gew.-% Wasser, 5 bis 25 Gew.-Füllstoff und 0,1 bis 3 Gew.-% Verdickungsmittel enthalten, jeweils bezogen auf das Gesamtgewicht des Zweikomponenten-Mörtelsystems.

Gegenstand der Erfindung ist weiterhin die Verwendung des Zwei- oder Mehrkomponenten-Mörtelsystems für Bauzwecke.

Im Sinne der vorliegenden Erfindung umfasst der Begriff *"für Bauzwecke"* das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Ganz besonders eignet sich das erfindungsgemäße Zwei- oder Mehrkomponenten-Mörtelsystem zur chemischen Befestigung von Konstruktionselementen und Verankerungsmitteln in mineralischen Untergründen wie Beton, Mauerwerk (Vollziegel oder Vollsteinmauerwerk), Hohlmauerwerk (Hohlziegel oder Lochsteinmauerwerk), Leicht- oder Porenbeton, insbesondere Beton und Ziegel.

### AUSFÜHRUNGSBEISPIELE

### Beispiele 1 bis 16 und Vergleichsbeispiele V1 bis V3

Es wurden Harzmischungen mit den in den Tabellen 1 bis 4 gezeigten Zusammensetzungen hergestellt, indem die Bestandteile homogen miteinander vermischt wurden. Die Mengenangaben sind jeweils Gewichtsteile (Gew.-Teile).

Zur Herstellung von Reaktionsharz-Mörtelmassen wurden 50 Gewichtsteile der so erhaltenen Harzmischungen mit 4 Gewichtsteilen pyrogener Kieselsäure, 15 Gewichtsteilen Tonerdezement und 31 Gewichtsteilen Quarzsand homogen vermischt. Hierdurch wurden die Harzkomponenten erhalten.

Als Härterkomponente wurde eine Mischung aus 1 Gewichtsteil Dibenzoylperoxid, 28 Gewichtsteilen Wasser, 4 Gewichtsteilen pyrogener Kieselsäure, 63 Gewichtsteilen Quarz (0 - 80 µm) und 4 Gewichtsteilen Tonerde verwendet.

Die Harzkomponente und die Härterkomponente wurden im Gewichtsverhältnis von 3:1 miteinander vermischt und von den erhaltenen Massen die Gelierzeiten sowie die Versagenslasten im Mauerwerksziegel bestimmt.

Von den Massen gemäß den Vergleichsbeispielen V2 und V3 sowie gemäß dem Beispiel 16 wurde zusätzlich die Viskosität bestimmt.

### Bestimmung der Gelierzeiten der Mörtelmassen

Die Bestimmung der Gelierzeiten der in dieser Weise erhaltenen Mörtelmassen erfolgt mit einer handelsüblichen Vorrichtung (GELNORM®-Gel Timer) bei einer Temperatur von 25°C. Hierzu werden die Komponenten gemischt und unmittelbar nach dem Mischen im Silikonbad auf 25°C temperiert und die Temperatur der Probe gemessen. Die Probe selbst befindet sich dabei in einem Reagenzglas, das in einen im Silikonbad versenkten Luftmantel zur Temperierung gesetzt wird.

Die Temperatur der Probe wird gegen die Zeit aufgetragen. Die Auswertung erfolgt gemäß DIN16945, Blatt 1 und DIN 16916. Die Topfzeit ist die Zeit, bei der ein Temperaturanstieg um 10K erreicht wird, hier von 25°C nach 35°C.

Die Ergebnisse der Gelierzeitbestimmungen sind in den nachfolgenden Tabellen 1 bis 4 aufgeführt.

### Bestimmung der Versagenslasten

Zur Bestimmung der Versagensverbundspannungen der ausgehärteten Masse verwendet man Ankergewindestangen M10, die in Bohrlöcher in Mauerziegel analog EN 791-1, aber mit einer Druckfestigkeit von ca. 35MPa mit einem Durchmesser von 12 mm und einer Bohrlochtiefe von 80 mm mit den Reaktionsharzmörtel-Zusammensetzungen der Beispiele und Vergleichsbeispiele eingedübelt werden. Man ermittelt die mittleren Versagenslasten durch zentrisches Ausziehen der Ankergewindestangen. Es werden jeweils drei Ankergewindestangen eingedübelt und nach 24 Aushärtung ihre Lastwerte bestimmt.

Die hierbei ermittelten Versagenslasten (kN) sind als Mittelwert in den nachfolgenden Tabellen 1 bis 4 aufgeführt.

### Messung der Viskosität der Harzmischungen

Die Viskosität der Harzmischungen wurde nach DIN EN ISO 2884 mit einem Rheometer RS 600 der Fa. Haake, Karlsruhe, einer Messgeometrie Platte-Kegel ∅ 60 mm, 1° ° Titan (C60/1° Ti), Spalt 0,052 mm bei einer Temperatur von 23°C und einer Schergeschwindigkeit von 150 s⁻¹ gemessen.

**Tabelle 1: Zusammensetzung der Harzmischungen, Gelierzeiten und Versagenslasten**

| **Beispiel** | **V1 ^{a)}** | **1** | **2** | **3** | **4** | **5** |
|---|---|---|---|---|---|---|
| UMA-Harz ^{b)} | 50 | 50 | 50 | 50 | 50 | 50 |
| Acetoaceton | | 6 | | | | |
| Benzylacetoacetat | | | 8 | | | |
| 2-(Methacryloyloxy)ethylacetoacetat | | | | 10 | | |
| Tris(acetoacetato)-trimethylolpropan | | | | | 4 | |
| 2-Acetyl-γ-butyrolacton | | | | | | 6 |
| Bis(hydroxyethyl)-p-toluidin | 1,5 | 1,5 | 1,5 | 1,5 | 1,5 | 1,5 |
| 4-Hydroxy-TEMPO ^{c)} | 0,11 | 0,13 | 0,13 | 0,13 | 0,12 | 0,13 |
| 1,4-Butandioldimethacrylat | ad 100 | ad 100 | ad 100 | ad 100 | ad 100 | ad 100 |
| | | | | | | |
| Massenverhältnis Acetoacetat: Initiator | n.a. | 46 | 61,5 | 77 | 33,3 | 46 |
| | | | | | | |
| Gelierzeit @ 25°C [min] | 4,0 | 5,0 | 5,2 | 4,2 | 5,4 | 4,2 |
| Versagenslast im Mauerwerksziegel M10*80 mm [kN] | 12,8 | 21,7 | 17,9 | 25,8 | 22,2 | 23,6 |

| | | | | | | |
|---|---|---|---|---|---|---|
| ^{a)} V = Vergleichsbeispiel ^{b)} Urethanmethacrylatharz, hergestellt gemäß DE 4111828 A1 ^{c)} TEMPO = 2,2,6,6-Tetramethylpiperidin-1-oxyl | | | | | | |

**Tabelle 2: Zusammensetzung der Harzmischungen, Gelierzeiten und Versagenslasten**

| **Beispiel** | **V2** | **6** | **7** | **8** | **9** | **10** |
|---|---|---|---|---|---|---|
| UMA-Harz | 50 | 50 | 50 | 50 | 50 | 50 |
| 2-(Methacryloyloxy)ethylacetoacetat | 10 | 10 | 10 | 10 | 10 | 10 |
| Bis(hydroxyethyl)-p-toluidin | 1,5 | 1,5 | 1,5 | 1,5 | 1,5 | 1,5 |
| Brenzkatechin | 0,07 | | | | | |
| Inhibitor 1 ^{d)} | | 0,13 | | | | |
| Inhibitor2 ^{e)} | | | 0,12 | | | |
| Inhibitor 3 ^{f)} | | | | 0,15 | | |
| Inhibitor 4 ^{g)} | | | | | 0,28 | |
| 4-Hydroxy-3,5-di-tert-butyltoluol | | | | | | 0,07 |
| 1,4-Butandioldimethacrylat | ad 100 | ad 100 | ad 100 | ad 100 | ad 100 | ad 100 |
| | | | | | | |
| Massenverhältnis Acetoacetat:Initiator | 143 | 77 | 83 | 67 | 36 | 143 |
| | | | | | | |
| Gelierzeit @ 25°C [min] | 4,0 | 4,2 | 3,9 | 4,5 | 4,1 | 3,6 |
| Versagenslast im Mauerwerksziegel M10*80 mm [kN] | 14,7 | 25,8 | 25,4 | 24,6 | 31,9 | 22,7 |

| | | | | | | |
|---|---|---|---|---|---|---|
| ^{d)} 4-Hydroxy-TEMPO ^{e)} 4-Phenacyliden-2,2,5,5-tetramethylimidazolidin-1-yloxy ^{f)} 2,3-Dihydro-2,2-diphenyl-3-(phenylimino)-1H-indol-1-oxylnitroxid ^{g)} 1-(Diethoxyphosphinyl)-2,2-dimethylpropyl-1,1-dimethylmethyl-nitroxid | | | | | | |

**Tabelle 3: Zusammensetzung der Harzmischungen, Gelierzeiten und Versagenslasten**

| **Beispiel** | **11** | **12** | **13** | **14** | **15** |
|---|---|---|---|---|---|
| UMA-Harz | 50 | | | 50 | 50 |
| Bisphenol A glycerolatdimethacrylat | | 50 | | | |
| Sartomer SR 348C ^{h)} | | | 75 | | |
| 2-(Methacryloyloxy)ethylacetoacetat | 10 | 8 | 8 | 8 | 2 |
| Bis(hydroxyethyl)-p-toluidin | 1,5 | 1,5 | 1,5 | 1,5 | 1,5 |
| 4-Hydroxy-TEMPO | 0,13 | 0,08 | 0,06 | 0,14 | 0,1 |
| 1,4-Butandioldimethacrylat | ad 100 | ad 100 | ad 100 | ad 100 | ad 100 |
| | | | | | |
| Massenverhältnis Acetoacetat:Initiator | 77 | 100 | 133 | 57 | 20 |
| Gelierzeit @ 25°C [min] | 4,2 | 4,7 | 4,8 | 4,6 | 4,4 |
| Versagenslast im Mauerwerksziegel M10*80 mm [kN] | 25,8 | 24,3 | 26,8 | 23,4 | 20,1 |

| | | | | | |
|---|---|---|---|---|---|
| ^{h)} ethoxyliertes Bisphenol-A-dimethacrylat | | | | | |

**Tabelle 4: Zusammensetzung der Harzmischungen, Gelierzeiten und Versagenslasten**

| **Beispiel** | **V3** | **V4** | **16** |
|---|---|---|---|
| UMA-Harz | 38 | 42 | 50 |
| 2-(Methacryloyloxy)ethylacetoacetat | 10 | 10 | 10 |
| Bis(hydroxyethyl)-p-toluidin | 1,5 | 1,5 | 1,5 |
| 4-Hydroxy-TEMPO | 0,11 | 0,12 | 0,13 |
| 1,4-Butandioldimethacrylat | ad 100 | ad 100 | ad 100 |
| | | | |
| Massenverhältnis Acetoacetat: Initiator | 91 | 83 | 77 |
| Harzviskosität [mPas] | 154 | 224 | 350 |
| Gelierzeit @ 25°C [min] | 5,5 | 3,5 | 4,2 |
| Versagenslast im Mauerwerksziegel M10*80 mm [kN] | 7,6 | 17,7 | 25,8 |

Aus den obigen Tabellen lässt sich erkennen, dass die erfindungsgemäßen Massen deutlich bessere Versagenslasten ergeben, als mit den Massen, die gemäß den Vergleichsbeispielen hergestellt wurden.

## Patentansprüche

1. Harzmischung umfassend mindestens eine radikalisch polymerisierbare Verbindung, mindestens einen Reaktivverdünner, der unter 1,3-Dicarbonylverbindungen der allgemeinen Formel (I) 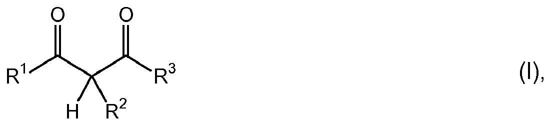 in der
R¹ eine geradkettige oder verzweigte, gegebenenfalls substituierte, C₁-C₆-Alkylgruppe, bevorzugt C₁-C₂-Alkylgruppe bedeutet;
R³ Wasserstoff oder eine geradkettige oder verzweigte, gegebenenfalls substituierte, C₁-C₆-Alkylgruppe, eine C₁-C₆-Alkoxygruppe oder eine Methacryloyloxygruppe der Formel (II) 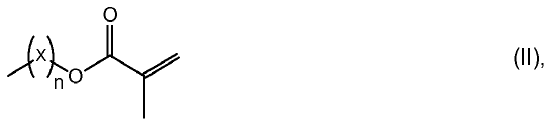
in der X eine Methylen-, Ethylenglykol- oder Propylenglykolgruppe bedeutet und n eine ganze Zahl mit einem Wert von 1 bis einschließlich 6 bedeutet;
R² Wasserstoff, eine geradkettige oder verzweigte, gegebenenfalls substituierte, C₁-C₆-Alkylgruppe oder eine C₁-C₆-Alkoxygruppe bedeutet, oder zusammen mit R³ einen, gegebenenfalls substituierten, fünf- oder sechsgliedrigen aliphatischen Ring bildet, welcher gegebenenfalls Heteroatome im oder am Ring umfasst;
oder der allgemeinen Formel (III) ausgewählt ist 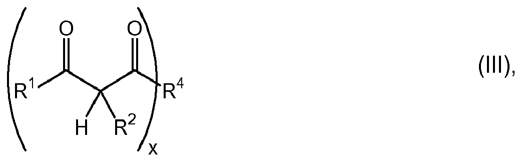 in der
R⁴ ein zwei oder höherwertiger Alkohol bedeutet,
x eine Zahl zwischen 1 und 6 bedeutet, und
R¹ und R² dieselbe Bedeutung wie oben definiert haben,
und mindestens einen Polymerisationsinhibitor, der unter stabilen N-Oxyl-Radikalen oder 4-Hydroxy-3,5-di-tert-butyltoluol ausgewählt ist, wobei das Verhältnis der mindestens einen 1,3-Dicarbonylverbindung und des Polymerisationsinhibitors 30:1 bis 150:1 beträgt.

2. Harzmischung nach Anspruch 1, wobei der mindestens eine Reaktivverdünner in einer Menge von 1 bis 15 Gew.-% und der mindestens eine Polymerisationsinhibitor in einer Menge von 0,005 bis 2 Gew.-% enthalten ist.

3. Harzmischung nach Anspruch 1 oder 2, wobei der mindestens eine Reaktivverdünner aus der Gruppe ausgewählt ist, die aus Acetylaceton, 2-(Acetoacetoxy)ethylmethacrylat, Triacetoacetatotrimethylolpropan, Benzylacetoacetat, α-Acetyl-γ-butyrolacton, *tert-*Butylacetoacetat und Ethylacetoacetat besteht.

4. Harzmischung nach einem der vorhergehenden Ansprüche, wobei der Polymerisationsinhibitor aus der Gruppe ausgewählt ist, die aus Piperidinyl-N-oxyl-, Tetrahydropyrrol-N-oxyl-, Indolin-N-oxyl-, β-phosphorylierten N-Oxyl-Radikalen und 4-Hydroxy-3,5-di-*tert*-butyltoluol besteht.

5. Harzmischung nach einem der vorhergehenden Ansprüche, wobei die radikalisch polymerisierbare Verbindung ein ungesättigtes Polyesterharz, ein Vinylesterharz, ein Urethan(meth)acrylatharz und/oder ein Epoxy(meth)acrylatharz ist.

6. Harzmischung nach einem der vorhergehenden Ansprüche, die ferner mindestens einen Beschleuniger enthält.

7. Harzmischung nach einem der vorhergehenden Ansprüche, die ferner weitere Reaktivverdünner und/oder Polymerisationsinhibitoren enthält.

8. Harzmischung nach einem der vorhergehenden Ansprüche, wobei die Viskosität der Harzmischung zwischen 200 und 800 mPa·s beträgt.

9. Reaktionsharzmörtel umfassend eine Harzmischung nach einem der Ansprüche 1 bis 8 und anorganische und/oder organische Zuschlagstoffe.

10. Reaktionsharzmörtel nach Anspruch 9, der als Zuschlagstoff einen anorganischen Füllstoff enthält, der aus der Gruppe ausgewählt ist, die aus Quarz, Sand, pyrogener Kieselsäure, Korund, Kreide Talkum, Keramik, Tonerde, Glas, Zement, Leichtspat und/oder Schwerspat in geeigneter Teilchengrößenverteilung oder Kombinationen daraus besteht.

11. Reaktionsharzmörtel nach Anspruch 9 oder 10, der als Zuschlagstoff ein Verdickungsmittel enthält, das aus der Gruppe ausgewählt ist, die aus pyrogener Kieselsäuren, Schichtsilikaten, Acrylat- oder Polyurethan-Verdickern, Rizinusölderivaten, Neuburger Kieselerde und Xanthangummi oder Kombinationen daraus besteht.

12. Zwei- oder Mehrkomponenten-Mörtelsystem umfassend einen Reaktionsharzmörtel nach einem der Ansprüche 9 bis 11 und reaktionsinhibierend getrennt einen Härter, der ein Härtungsmittel und anorganische und/oder organische Zuschlagstoffe umfasst.

13. Zwei- oder Mehrkomponenten-Mörtelsystem nach Anspruch 12, wobei das Härtungsmittel ein anorganisches oder organisches Peroxid ist.

14. Zwei- oder Mehrkomponenten-Mörtelsystem nach Anspruch 12 oder 13, wobei der Beschleuniger in einer Menge von 0,1 bis 1,5 Gew.-%, der Inhibitor in einer Menge von 0,003 bis 0,35 Gew.-% und das Härtungsmittel in einer Menge von 0,1 bis 3 Gew.-% enthalten sind, jeweils bezogen auf das Gesamtgewicht des Zwei- oder Mehrkomponenten-Mörtelsystems.

15. Zwei- oder Mehrkomponenten-Mörtelsystem nach Anspruch 14, wobei der Beschleuniger in einer Menge von 0,1 bis 0,5 Gew.-%, der Inhibitor in einer Menge von 0,003 bis 0,07 Gew.-% und das Härtungsmittel in einer Menge von 0,1 bis 0,35 Gew.-% enthalten sind, jeweils bezogen auf das Gesamtgewicht des Zwei- oder Mehrkomponentensystems.

16. Verwendung eines Reaktionsharz-Mörtels nach einem der Ansprüche 9 bis 11 oder eines Zwei- oder Mehrkomponenten-Mörtelsystems nach einem der Ansprüche 12 bis 15 für Bauzwecke.

17. Verwendung nach Anspruch 16, zur chemischen Befestigung von Befestigungs- und/oder Verankerungsmitteln in Bohrlöchern in mineralischen Untergründen.
